# EUROPEAN PATENT APPLICATION

(11) **EP 4 509 346 A1**
(43) Date of publication of application: **19.02.2025**
(21) Application number: 24187547.5
(22) Date of filing: 09.07.2024
(51) Int. Cl.: B60L 50/75, B60L 58/40, G06N 3/0464, G06N 3/086, G06N 3/088, G06N 3/0895, G06N 3/09, G06N 3/092, G06N 3/126, G06N 20/20, H01M 8/04082, H01M 8/04089, H01M 8/22, G06N 3/094, G06N 3/096, G06N 3/06, G06N 3/047, B60L 3/12, B60K 15/03

(54) **APPARATUS FOR CONTROLLING VEHICLE EQUIPPED WITH AMMONIA FUEL CELL, METHOD FOR OPERATING THE SAME, AND VEHICLE COMPRISING THE SAME**

(30) Priority: 21.07.2023 KR 20230095542
(71) Applicant: SK Innovation Co., Ltd., Seoul 03188 (KR)
(72) Inventor: PARK, Chan Saem, 34124 Daejeon (KR); KIM, Jae Jeong, 34124 Daejeon (KR); BAE, Sun Hyuk, 34124 Daejeon (KR)
(74) Representative: Prüfer & Partner mbB Patentanwälte · Rechtsanwälte

(57) **Abstract**

An apparatus and a method for controlling a vehicle equipped with an ammonia fuel cell are disclosed. The apparatus of the present disclosure may include: an ammonia tank configured to store ammonia; a cracker configured to decompose the ammonia supplied from the ammonia tank into hydrogen; and a controller configured to calculate a predicted hydrogen consumption amount based on at least one of real-time driving information and driving pattern information, and control at least one of a supply amount of ammonia and internal conditions of the cracker based on the predicted hydrogen consumption amount.

## Description

### [BACKGROUND OF THE INVENTION]

### 1. Field of the Invention

The present disclosure relates to an apparatus for controlling a vehicle equipped with an ammonia fuel cell and a method for operating the same.

### 2. Description of the Related Art

A vehicle includes a driving means which enables the vehicle to move by an energy received from an energy source. One of the most widely used energy sources is the internal combustion engine which runs using fossil fuel as a fuel. However, during combustion of fuel, carbon dioxide is generated to cause pollution of the atmosphere, such that it may be preferable to use an energy source generating substances with less pollution.

The use of fuel cells to replace the internal combustion engines, such as hydrogen cells, is already well known in the art. When hydrogen in the form of dihydrogen is oxidized by a fuel cell, the cell produces electricity and generates heat to supply energy to the driving means. Hydrogen may be stored in the form of gaseous ammonia, which is absorbed or adsorbed on salts in a storage cartridge. This is a reliable method to store the hydrogen. Therefore, in order to form dihydrogen that can be supplied to the fuel cell, ammonia should be desorbed from the salts and then decomposed (cracked). The terms absorption and desorption will be used to refer to the storage and release of gaseous ammonia on or from the salts, respectively, so long as such storage is achieved by absorption or adsorption.

When driving a vehicle equipped with an ammonia fuel cell, it is necessary to stabilize the ammonia decomposition rate in the cracker and minimize residual ammonia. To this end, researches to control an ammonia fuel cell system by monitoring minute changes in driving patterns based on real-time driving information and existing driving pattern information of a driver are being conducted.

### [SUMMARY OF THE INVENTION]

An object according to an aspect of the present disclosure is to provide an apparatus for controlling a vehicle equipped with an ammonia fuel cell and a method for operating the same, in which minute changes in driving patterns are monitored and an ammonia fuel cell system is controlled based on real-time driving information, existing driving pattern information of a driver and the like, such that the ammonia decomposition rate in the cracker may be stabilized and residual ammonia may be minimized, thereby contributing to environmental friendliness and producing clean energy.

To achieve the above objects, according to an aspect of the present invention, there is provided an apparatus for controlling a vehicle equipped with an ammonia fuel cell, the apparatus including: an ammonia tank configured to store ammonia; a cracker configured to decompose the ammonia supplied from the ammonia tank into hydrogen; and a controller configured to calculate a predicted hydrogen consumption amount based on at least one of real-time driving information and driving pattern information, and to control at least one of a supply amount of ammonia and internal conditions of the cracker based on the predicted hydrogen consumption amount.

Herein, the controller configured to calculate a predicted hydrogen consumption amount may be configured to control not only one of, but optionally both of real-time driving information and driving pattern information. Further, the controller may be configured to control not only one of, but optionally both of the supply amount of ammonia and the internal conditions of the cracker based on the predicted hydrogen consumption amount.

According to an embodiment, the controller may include: a predicted hydrogen consumption amount calculation unit configured to calculate a plurality of predicted hydrogen consumption amounts at specific points in time based on at least one of (i.e. optionally not only one of, but optionally more than one of, or even all of) the real-time driving information and the driving pattern information for each specific point in time, and calculate a final predicted hydrogen consumption amount based on at least one of (i.e. optionally not only one of, but optionally more than one of, or even all of) the plurality of predicted hydrogen consumption amounts; and an ammonia supply amount control unit configured to calculate the supply amount of ammonia required to secure the final predicted hydrogen consumption amount, and perform operations of controlling pipe and valve systems so as to supply the ammonia to the cracker as much as the calculated supply amount of the ammonia.

According to an embodiment, the controller may include: a predicted hydrogen consumption amount calculation unit configured to calculate a plurality of predicted hydrogen consumption amounts at specific points in time based on at least one of (i.e. optionally not only one of, but optionally more than one of, or even all of) the real-time driving information and the driving pattern information for each specific point in time, and calculate a final predicted hydrogen consumption amount based on at least one of (i.e. optionally not only one of, but optionally more than one of, or even all of) the plurality of predicted hydrogen consumption amounts; and a cracker condition control unit configured to control internal conditions of the cracker based on a decomposition amount in which the ammonia is decomposed into hydrogen within the cracker and the final predicted hydrogen consumption amount.

According to an embodiment, the controller may include: a predicted hydrogen consumption amount calculation unit configured to calculate a plurality of predicted hydrogen consumption amounts at specific points in time based on at least one of (i.e. optionally not only one of, but optionally more than one of, or even all of) the real-time driving information and the driving pattern information for each specific point in time, and calculate a final predicted hydrogen consumption amount based on at least one of (i.e. optionally not only one of, but optionally more than one of, or even all of) the plurality of predicted hydrogen consumption amounts; an ammonia supply amount control unit configured to calculate the supply amount of ammonia required to secure the final predicted hydrogen consumption amount, and perform operations of controlling pipe and valve systems so as to supply the ammonia to the cracker as much as the calculated supply amount of the ammonia; and a cracker condition control unit configured to set internal conditions of the cracker so that the decomposition amount in which the ammonia is decomposed into hydrogen within the cracker reaches the final predicted hydrogen consumption amount.

According to an embodiment, the predicted hydrogen consumption amount calculation unit may include: a first predicted hydrogen consumption amount calculation unit configured to calculate a first predicted hydrogen consumption amount at a first time point based on first real-time driving information at the first time point; a second predicted hydrogen consumption amount calculation unit configured to calculate a second predicted hydrogen consumption amount at a second time point later than the first time point based on at least one of (i.e. optionally not only one of, but optionally more than one of, or even all of) the real-time driving information and the driving pattern information; and a final predicted hydrogen consumption amount calculation unit configured to calculate a final predicted hydrogen consumption amount based on at least one of (i.e. optionally not only one of, but optionally more than one of, or even all of) the first predicted hydrogen consumption amount and the second predicted hydrogen consumption amount.

According to an embodiment, the second predicted hydrogen consumption amount calculation unit may be configured to: predict a driving state of a driver at the second time point based on the first real-time driving information at the first time point using an artificial intelligence model that has performed training the existing driving pattern information of the driver; and calculate the second predicted hydrogen consumption amount corresponding to a change in the predicted hydrogen consumption amount, by analyzing a difference between the first time point and the second time point.

According to an embodiment, the predicted hydrogen consumption amount calculation unit may be configured to: predict a maximum sudden acceleration state based on the real-time driving information and the driving pattern information; and calculate the predicted hydrogen consumption amount required to stably supply the hydrogen in the maximum sudden acceleration state.

According to an embodiment, the predicted hydrogen consumption amount calculation unit may calculate the predicted hydrogen consumption amount based on the real-time driving information, the driving pattern information, battery information of the apparatus, and internal status information (environmental information) of the ammonia tank.

According to an embodiment, the real-time driving information may include at least one of (i.e. optionally not only one of, but optionally more than one of, or even all of) a magnitude of pressure applied to an accelerator pedal, a change amount in the magnitude of pressure applied to the accelerator pedal, a magnitude of pressure applied to a brake pedal, a change amount in the magnitude of pressure applied to the brake pedal, the number of times of sudden acceleration during a preset period, the number of times of sudden braking during a preset period, a driving speed, a driving distance, a driving time and a drive mode, and the driving pattern information may include at least one of (i.e. optionally not only one of, but optionally more than one of, or even all of) an acceleration pattern, a deceleration pattern, a usage ratio of drive mode, an average driving speed, the average number of times of lane change, and an internal environment of the vehicle.

According to another aspect of the present invention, there is provided a method for operating an apparatus for controlling a vehicle equipped with an ammonia fuel cell, the method including: calculating a predicted hydrogen consumption amount based on at least one of real-time driving information and driving pattern information; and controlling at least one of a supply amount of ammonia supplied from an ammonia tank based on the predicted hydrogen consumption amount, and internal conditions of a cracker configured to decompose the ammonia supplied from the ammonia tank into hydrogen.

Further, the method may use an apparatus as described by the previous embodiments.

According to another aspect of the present invention, there is provided a vehicle comprising an ammonia fuel cell and the apparatus for controlling the ammonia fuel cell as specified in the previous aspects and embodiments.

According to an embodiment of the present disclosure, by monitoring minute changes in driving patterns and controlling the ammonia fuel cell system based on real-time driving information and existing driving pattern information of the driver, the ammonia decomposition rate in the cracker may be stabilized and residual ammonia may be minimized.

In addition, according to an embodiment of the present disclosure, by controlling the driver-customized hydrogen production amount based on the usual driving pattern of the driver and predicting even information at a point in time after a certain time has elapsed, it is possible to more accurately predict the required hydrogen consumption amount and prevent energy shortage phenomenon at the moment when maximum output is required.

In addition, according to an embodiment of the present disclosure, by optimizing the ammonia supply amount or internal conditions of the cracker, it is possible to prevent the battery from being overcharged caused by supplying more ammonia than necessary, prevent the residual ammonia from being generated, and stabilize the ammonia decomposition rate.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a view for describing an apparatus according to an embodiment of the present disclosure;
FIG. 2 is a view for describing various information included in the apparatus according to an embodiment of the present disclosure;
FIG. 3 is a view for describing a controller according to an embodiment of the present disclosure;
FIG. 4 is a view for describing a predicted hydrogen consumption amount calculation unit according to an embodiment of the present disclosure; and
FIG. 5 is a flowchart illustrating procedures of a method for operating the apparatus according to an embodiment of the present disclosure.

### [DETAILED DESCRIPTION OF THE INVENTION]

Hereinafter, the present disclosure will be described in detail through embodiments with reference to the accompanying drawings. However, the embodiments are merely illustrative and the present disclosure is not limited to the specific embodiments described by way of example.

The same reference numerals are denoted to the same components throughout the present disclosure. The present disclosure does not describe all elements of the embodiments, and general contents in the technical field to which the present disclosure pertains or overlapping contents between the embodiments will not be described. The terms `unit, module, member and block' used herein may be implemented as software or hardware, and depending on the embodiments, a plurality of `units, modules, members and blocks' may be implemented as one component, or one 'part, module, member, or block' may include a plurality of components.

Throughout the specification, when the explanatory phrase a part is "connected" to another part is used, this includes not only the case where the part is "directly connected" to the other part, but also the case where the part is "indirectly connected" to the other part, and the indirect connection includes connection through a wireless communication network.

In addition, when the explanatory phrase a part "comprises or includes" a component is used, this means that the part may further include the component without excluding other components, unless there is a description opposite thereto.

Throughout the specification, when the explanatory phrase a member is located "on" another member is used, this includes not only the case where the member is in contact with the other member, but also the case where another member exists between the two members.

Terms such as first and second, etc. are used to distinguish one component from another component, and the components are not limited by the above-described terms.

The singular forms "a," "an" and "the" are intended to include the plural forms as well, unless the context clearly indicates otherwise.

The identification numerals for each step are used for the convenience of description. The identification numerals do not describe the order of each step, and each step may be performed differently from the specified order unless a specific order is clearly described in the context.

In this specification, the 'apparatus according to the present disclosure' includes all various devices that can perform computational processing and provide results thereof to a user. For example, the apparatus according to the present disclosure may include all of a computer, a server device and a portable terminal, or may be any form thereof.

Here, the computer may include, for example, a laptop or desktop computer, laptop PC, tablet PC, slate PC, etc. equipped with a web browser.

The server device is a server that processes information by performing communication with an external device, and may include an application server, computing server, database server, file server, game server, mail server, proxy server and web server.

The portable terminal is, for example, a wireless communication device with which portability and mobility are assured, and may include: all types of handheld wireless communication devices such as a personal communication system (PCS), global system for mobile communications (GSM), personal digital cellular (PDC), personal handyphone system (PHS), personal digital assistant (PDA), international mobile telecommunication (IMT)-2000, code division multiple access (CDMA)-2000, wideband code division multiple access (W-CDMA), wireless broadband internet (WiBro) terminal, and smart phone, etc.; and wearable devices such as a watch, ring, bracelet, anklet, necklace, glasses, contact lenses, and head-mounted-device (HMD), etc.

Functions related to artificial intelligence according to the present disclosure are operated through a processor and a memory. The processor may include one or a plurality of processors. In this case, the one or plurality of processors may be general-purpose processors such as a CPU, AP, or digital signal processor (DSP), etc., dedicated graphics processors such as a GPU or vision processing unit (VPU), etc., or dedicated artificial intelligence processors such as an NPU. The one or plurality of processors control to process input data according to predefined operation rules or artificial intelligence models stored in the memory. Alternatively, when the one or plurality of processors are dedicated artificial intelligence processors, the artificial intelligence dedicated processors may be designed with a hardware structure specialized for processing a specific artificial intelligence model.

The predefined operation rule or artificial intelligence model are characterized by being generated or trained through learning. As used herein, the expression "being generated or trained through learning" means that the basic artificial intelligence model is trained using a large number of learning data by a learning algorithm, thereby generating a predefined operation rule or artificial intelligence model set to perform the desired characteristics (or purposes). This learning may be accomplished in the device itself on which the artificial intelligence is performed according to the present disclosure, or may be accomplished through a separate server and/or system. Examples of learning algorithms include supervised learning, unsupervised learning, semi-supervised learning, or reinforcement learning, but they are not limited to the above-described examples.

The artificial intelligence model may consist of a plurality of neural network layers. Each of the plurality of neural network layers has a plurality of weight values, performs neural network calculation through calculations between the calculation results of the previous layer and the plurality of weight values. The plurality of weight values assigned to the plurality of neural network layers may be optimized by the learning results of the artificial intelligence model. For example, the plurality of weight values may be updated so that loss or cost values obtained from the artificial intelligence model are reduced or minimized during the learning process. The artificial neural network may include a deep neural network (DNN) such as a convolutional neural network (CNN), deep neural network (DNN), recurrent neural network (RNN), restricted Boltzmann machine (RBM), deep belief network (DBN), bidirectional recurrent deep neural network (BRDNN), or Deep Q-Networks, etc., but it is not limited to the above-described examples.

According to an exemplary embodiment of the present disclosure, the processor may implement artificial intelligence. As used herein, the artificial intelligence refers to a machine learning method based on an artificial neural network which causes the machine to perform learning by imitating human biological neurons. Methodology of artificial intelligence may be divided, according to the learning method, into: supervised learning in which the answer (output data) to the question (input data) is defined by providing input data and output data together as training data; unsupervised learning in which the answer (output data) to the question (input data) is not determined by providing only input data without output data; and reinforcement learning in which a reverse is given from an external environment whenever any action is taken in the current state, and training is performed in a direction of maximizing this reverse. In addition, the methodology of artificial intelligence may be divided according to an architecture which is the structure of learning model. The architecture of widely used deep learning technology may be divided into a convolutional neural network (CNN), recurrent neural network (RNN), transformer, or generative adversarial networks (GAN), etc.

The device and system of the present disclosure may include artificial intelligence models. The artificial intelligence model may be implemented as a single artificial intelligence model or a plurality of artificial intelligence models. The artificial intelligence model may consist of neural networks (or artificial neural networks), and may include statistical learning algorithms which mimic biological neurons in machine learning and cognitive science. The neural network may refer to an overall model in which artificial neurons (nodes) forming a network through the combination of synapses change the coupling strength of the synapses through learning to have problem solving skills. Neurons in the neural network may include the combination of weight values or biases. The neural network may include one or more layers consisting of one or more neurons or nodes. As an embodiment, the device may include an input layer, a hidden layer and an output layer. The neural network consisting of the device may infer the result (output) to be predicted from arbitrary input (input) by changing the weight values of neurons through learning.

The processor may generate a neural network, cause the neural network to perform training through learning, perform calculation based on the received input data, generate information signals based on the execution results, or cause the neural network to perform retraining. Models of the neural network may include various types of models such as GoogleNet, AlexNet, VGG Network, etc., for example, convolution neural network (CNN), region with convolution neural network (R-CNN), region proposal network (RPN), recurrent neural network (RNN), stacking-based deep neural network (S-DNN) state-space dynamic neural network (S-SDNN), deconvolution network, deep belief network (DBN), restricted Boltzmann machine (RBM), fully convolutional network (FCN), long short-term memory (LSTM) network, classification network, and the like, but it is not limited thereto. The processor may include one or more processors to perform calculations according to models of the neural network. For example, the neural network may include a deep neural network.

The neural network may include the convolutional neural network (CNN), recurrent neural network (RNN), perceptron, multilayer perceptron, feed forward (FF), radial basis network (RBF), deep feed forward (DFF), long short term memory (LSTM), gated recurrent unit (GRU), auto encoder (AE), variational auto encoder (VAE), denoising auto encoder (DAE), sparse auto encoder (SAE), Markov chain (MC), Hopfield network (HN), Boltzmann machine (BM), restricted Boltzmann machine (RBM), deep belief network (DBN), deep convolutional network (DCN), deconvolutional network (DN), deep convolutional inverse graphics network (DCIGN), generative adversarial network (GAN), liquid state machine (LSM), extreme learning machine (ELM), echo state network (ESN), deep residual network (DRN), differential neural computer (DNC), neural turning machine (NTM), capsule network (CN), Kohonen network (KN) and attention network (AN), but it is not limited thereto. Those skilled in the art will understand that it may include any neural network.

According to an exemplary embodiment of the present disclosure, the processor may include various artificial intelligence structures and algorithms such as GoogleNet, AlexNet, VGG Network, etc., for example, convolution neural network (CNN), region with convolution neural network (R-CNN), region proposal network (RPN), recurrent neural network (RNN), stacking-based deep neural network (S-DNN) state-space dynamic neural network (S-SDNN), deconvolution network, deep belief network (DBN), restricted Boltzmann machine (RBM), fully convolutional network (FCN), long short-term memory (LSTM) network, classification network, generative modeling, eXplainable AI, Continual AI, representation learning, AI for material design, BERT for natural language processing, SP-BERT, MRC/QA, Text Analysis, Dialog System, GPT-3, GPT-4, Visual Analytics for vision processing, Visual Understanding, Video Synthesis, Anomaly Detection for ResNet data intelligence, Prediction, Time-Series Forecasting, Optimization, Recommendation, Data Creation, and the like, but it is not limited thereto.

Hereinafter, embodiments of the present disclosure will be described in detail with reference to the accompanying drawings.

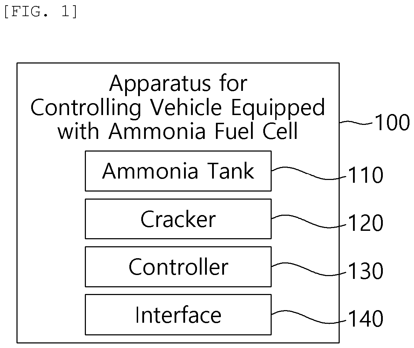

FIG. 1 is a view for describing an apparatus according to an embodiment of the present disclosure.

Referring to FIG. 1, an apparatus 100 may control a vehicle equipped with an ammonia fuel cell. The apparatus 100 may predict a hydrogen consumption amount required for operation of the vehicle from a microscopic perspective based on real-time driving information and/or driving pattern information. In addition, the apparatus 100 may control the vehicle equipped with an ammonia fuel cell according to a predicted hydrogen consumption amount. The apparatus 100 may include an ammonia tank 110, a cracker 120, a controller 130, and an interface 140.

The ammonia tank 110 may store ammonia. The ammonia tank 110 may provide ammonia to the cracker 120 as much as the supply amount of ammonia determined according to the control of the controller 130.

The cracker 120 may decompose the ammonia supplied from the ammonia tank 110 into hydrogen. The cracker 120 may decompose the ammonia into hydrogen under internal conditions of the cracker 120 determined according to the control of the controller 130.

The controller 130 may calculate the predicted hydrogen consumption amount based on at least one of real-time driving information and driving pattern information. In addition, the controller 130 may control at least one of the supply amount of ammonia and the internal conditions of the cracker based on the predicted hydrogen consumption amount.

The real-time driving information may refer to vehicle driving information of a user (or driver) monitored in real time from the microscopic perspective.

The driving pattern information may refer to information on usual driving patterns (e.g., driving habits) of the driver obtained by training an artificial intelligence model.

The control method for the controller 130 may include a method for controlling a supply amount of ammonia to be supplied to the cracker 120 and/or a method for controlling the internal conditions of the cracker 120.

The controller 130 may correct the hydrogen consumption amount to maintain the driving state at the current time point by considering the hydrogen consumption amount required for the predicted driving state at a point in time after the current time point.

The controller 130 may include a memory (not shown) that stores data for an algorithm for controlling operations of components in the apparatus 100 or a program that reproduces the algorithm, and at least one processor that performs control operations using the data stored in the memory. In this case, the memory and processor may be implemented as a separate chip, respectively. Alternatively, the memory and processor may be implemented as a single chip.

The interface 140 may provide an interfacing function that allows the user to select an automatic control mode for automatically controlling the supply amount of ammonia or a manual control mode for manually controlling the supply amount of ammonia.

Although not shown in the drawings, the apparatus 100 may further include: an input unit intended to input image information (or signal), audio information (or signal), data, or information input from the user; a communication unit including one or more components that enable the apparatus to communicate with an external device; an audio output unit configured to output audio data received from an outside or stored in the memory or outputs audio signals related to functions performed by the apparatus 100; a display unit configured to display information processed by the apparatus 100; a battery and the like.

The memory may store: data for supporting various functions of the apparatus 100 and a program for an operation of the controller 130; input/output data (e.g., music files, still images, moving images, etc.); a number of application programs or applications running on the apparatus 100; and data and commands for an operation of the apparatus 100. At least some of these application programs may be downloaded from an external server through wireless communication. These memories may include at least one type of storage medium such as a flash memory type, hard disk type, solid state disk (SSD) type, silicon disk drive (SDD) type, multimedia card micro type, card type memory (e.g., SD or XD memory, etc.), random access memory (RAM), static random access memory (SRAM), read-only memory (ROM), electrically erasable programmable read-only memory (EEPROM), programmable read-only memory (PROM), magnetic memory, magnetic disk and optical disk. In addition, the memory is separate from the apparatus 100, but may be a database connected thereto by wired or wirelessly.

According to the above description, by monitoring minute changes in driving patterns and controlling the ammonia fuel cell system based on real-time driving information and existing driving pattern information of the driver, the ammonia decomposition rate in the cracker may be stabilized and residual ammonia may be minimized.

In addition, according to the above description, by controlling the driver-customized hydrogen production amount based on the usual driving pattern of the driver and predicting even information at a point in time after a certain time has elapsed, it is possible to more accurately predict the required hydrogen consumption amount and prevent energy shortage phenomenon at the moment when maximum output is required.

In addition, according to the above description, by optimizing the ammonia supply amount or internal conditions of the cracker, it is possible to prevent the battery from being overcharged caused by supplying more ammonia than necessary, prevent the residual ammonia from being generated, and stabilize the ammonia decomposition rate.

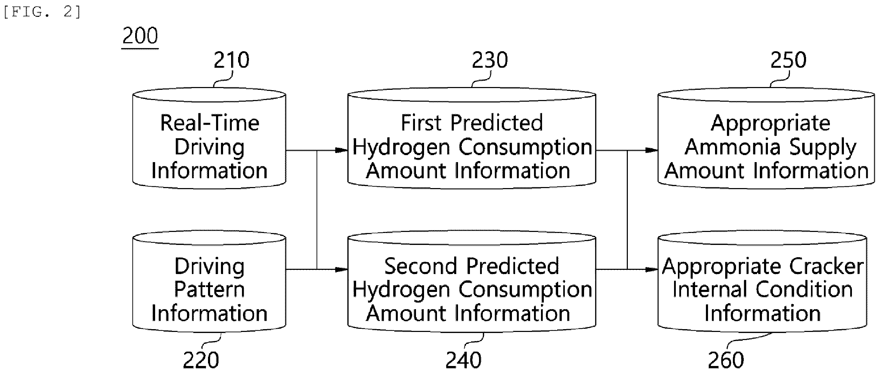

FIG. 2 is a view for describing various information included in the apparatus according to an embodiment of the present disclosure.

Referring to FIG. 2, various information 200 included in the apparatus may be stored in the memory. The various information 200 may include real-time driving information 210, driving pattern information 220, first predicted hydrogen consumption amount information 230, second predicted hydrogen consumption amount information 240, appropriate ammonia supply amount information 250, and appropriate cracker internal condition information 260.

The real-time driving information 210 may include, for example, one or more of a magnitude of pressure applied to an accelerator pedal, a change amount in the magnitude of pressure applied to the accelerator pedal, a magnitude of pressure applied to a brake pedal, a change amount in the magnitude of pressure applied to the brake pedal, the number of times of sudden acceleration during a preset period, the number of times of sudden braking during a preset period, a driving speed, a driving distance, a driving time and a drive mode.

The driving pattern information 220 may include, for example, one or more of an acceleration pattern, a deceleration pattern, a usage ratio of drive mode, an average driving speed, the average number of times of lane change, and an internal environment of the vehicle.

The drive mode may include, for example, one or more of comfort, eco, sport, terrain, off-road and the like.

Each of the first predicted hydrogen consumption amount information 230 and the second predicted hydrogen consumption amount information 240 may be generated using the real-time driving information 210 and the driving pattern information 220.

The first predicted hydrogen consumption amount information 230 may be information including a first predicted hydrogen consumption amount at a first time point. In some embodiments, the first time point may be the current time point.

The second predicted hydrogen consumption amount information 240 may be information including a second predicted hydrogen consumption amount at a second time point. The second time point may be a point in time when a certain amount of time has elapsed after the first time point. In some embodiments, the first time point may be the current time point, and the second time point may be any point in time after the current time point. However, it is not limited thereto.

The appropriate ammonia supply amount information 250 and/or the appropriate cracker internal condition information 260 may be generated using the first predicted hydrogen consumption amount information 230 and the second predicted hydrogen consumption amount information 240. The appropriate ammonia supply amount information 250 and/or the appropriate cracker internal condition information 260 may be generated by the controller 130.

The appropriate ammonia supply amount information 250 may include information indicating an amount of ammonia to be supplied to the cracker 120 from the ammonia tank 110.

The appropriate cracker internal condition information 260 may include information indicating the internal conditions of the cracker 120. The internal conditions of the cracker 120 may include, for example, one or more of internal temperature, internal pressure, internal humidity, ammonia flow rate, and hydrogen flow rate, etc., thereof.

Although not shown in the drawings, the various information 200 may further include battery information of the apparatus 100 and internal status information (environmental information) of the ammonia tank 110. The battery information may be information indicating the state of a battery provided in the apparatus 100. The internal status information (environmental information) of the ammonia tank 110 may include, for example, one or more of temperature, pressure, and humidity, etc. of the ammonia tank.

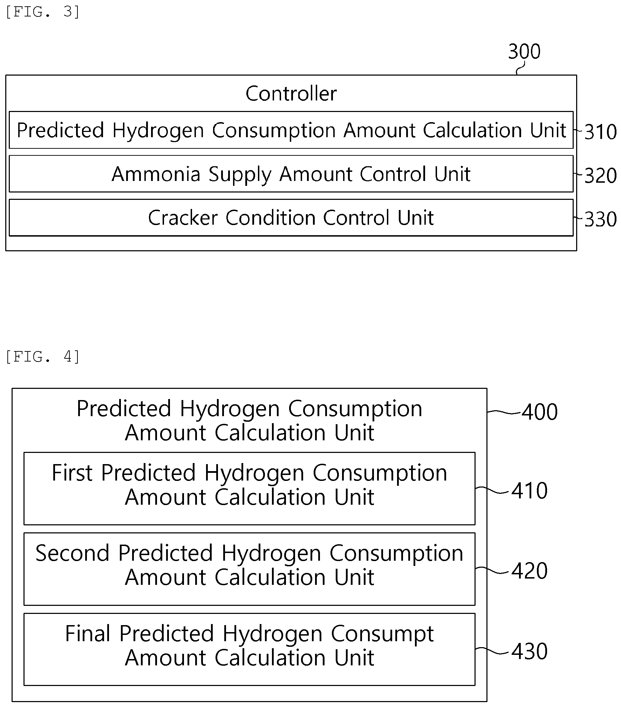

FIG. 3 is a view for describing a controller according to an embodiment of the present disclosure.

Referring to FIG. 3, a controller 300 according to some embodiments may control the supply amount of ammonia based on the predicted hydrogen consumption amount. The controller 300 according to some embodiments may include a predicted hydrogen consumption amount calculation unit 310 and an ammonia supply amount control unit 320.

The predicted hydrogen consumption amount calculation unit 310 may calculate a plurality of predicted hydrogen consumption amounts at specific points in time based on at least one of, optionally both of, the real-time driving information 210 and the driving pattern information 220 for each specific point in time. In addition, the predicted hydrogen consumption amount calculation unit 310 may calculate a final predicted hydrogen consumption amount based on at least one of, optionally more than one of or even all of, the plurality of predicted hydrogen consumption amounts.

In some embodiments, the predicted hydrogen consumption amount calculation unit 310 may predict a maximum sudden acceleration state based on the real-time driving information and the driving pattern information. In addition, the predicted hydrogen consumption amount calculation unit 310 may calculate the predicted hydrogen consumption amount required to stably supply hydrogen under the maximum sudden acceleration state.

In some other embodiments, the predicted hydrogen consumption amount calculation unit 310 may calculate the predicted hydrogen consumption amount based on the real-time driving information, the driving pattern information, the battery information of the apparatus, and the internal conditions (environmental information) of the ammonia tank.

The ammonia supply amount control unit 320 may calculate the supply amount of ammonia required to secure the final predicted hydrogen consumption amount. In addition, the ammonia supply amount control unit 320 may perform operations of controlling pipe and valve systems so that ammonia is supplied to the cracker as much as the supply amount of ammonia. The operations of controlling pipe and valve systems may refer to various control operations related to the pipe and valve systems.

The controller 300 according to some other embodiments may control the internal conditions of the cracker 120 based on the predicted hydrogen consumption amount. The controller 300 according to some other embodiments may include the predicted hydrogen consumption amount calculation unit 310 and a cracker condition control unit 330.

The cracker condition control unit 330 may control the internal conditions of the cracker 120 based on a decomposition amount in which the ammonia is decomposed into hydrogen within the cracker 120 and the final predicted hydrogen consumption amount. For example, the cracker condition control unit 330 may determine the temperature, pressure, humidity, ammonia flow rate, hydrogen flow rate, etc. inside of the cracker 120, so that the decomposition amount does not exceed or fall below the final predicted hydrogen consumption amount calculated by the predicted hydrogen consumption amount calculation unit 310 (or so that the decomposition amount in which the ammonia is decomposed into hydrogen within the cracker 120 reaches the final predicted hydrogen consumption amount).

The controller 300 according to some other embodiments may control the supply amount of ammonia and the internal conditions of the cracker 120 based on the predicted hydrogen consumption amount. The controller 300 according to some other embodiments may include the predicted hydrogen consumption amount calculation unit 310, the ammonia supply amount control unit 320, and the cracker condition control unit 330.

FIG. 4 is a view for describing a predicted hydrogen consumption amount calculation unit according to an embodiment of the present disclosure.

Referring to FIG. 4, a predicted hydrogen consumption amount calculation unit 400 may include a first predicted hydrogen consumption amount calculation unit 410, a second predicted hydrogen consumption amount calculation unit 420, and a final predicted hydrogen consumption amount calculation unit 430.

The first predicted hydrogen consumption amount calculation unit 410 may calculate a first predicted hydrogen consumption amount at the first time point based on the first real-time driving information at the first time point. The first predicted hydrogen consumption amount calculation unit 410 may calculate a hydrogen consumption amount for maintaining the driving state at the first time point (e.g., the current time point). For example, the first predicted hydrogen consumption amount calculation unit 410 may calculate the first predicted hydrogen consumption amount at the first time point based on the driving speed, an acceleration change rate or deceleration change rate, the drive mode, and operation state of the air conditioning device (e.g., air conditioner, heater, etc.) at the first time point.

The second predicted hydrogen consumption amount calculation unit 420 may calculate a second predicted hydrogen consumption amount at the second time point later than the first time point based on at least one of, optionally both of, the real-time driving information 210 and the driving pattern information 220. The second predicted hydrogen consumption amount calculation unit 420 may calculate a hydrogen consumption amount for changing the current driving state to a predicted driving state at the second time point (for example, a point in time when a specific time has passed from the current time point). For example, the second predicted hydrogen consumption amount calculation unit 420 may predict a driving state at the second time point using an artificial intelligence model that has performed training the existing driving pattern information of the driver. Specifically, for example, by using an artificial intelligence model that has performed training the existing driving pattern information of the driver, the second predicted hydrogen consumption amount calculation unit 420 may predict a driving state of the driver at the second time point based on the first real-time driving information at the first time. In addition, the second predicted hydrogen consumption amount calculation unit 420 may calculate the second predicted hydrogen consumption amount corresponding to a change in the predicted hydrogen consumption amount, by analyzing a difference between the first time point and the second time point.

The final predicted hydrogen consumption amount calculation unit 430 may calculate a final predicted hydrogen consumption amount based on at least one of, optionally both of, the first predicted hydrogen consumption amount and the second predicted hydrogen consumption amount. In some embodiments, the final predicted hydrogen consumption amount calculation unit 430 may calculate the final predicted hydrogen consumption amount using the first predicted hydrogen consumption amount and the second predicted hydrogen consumption amount.

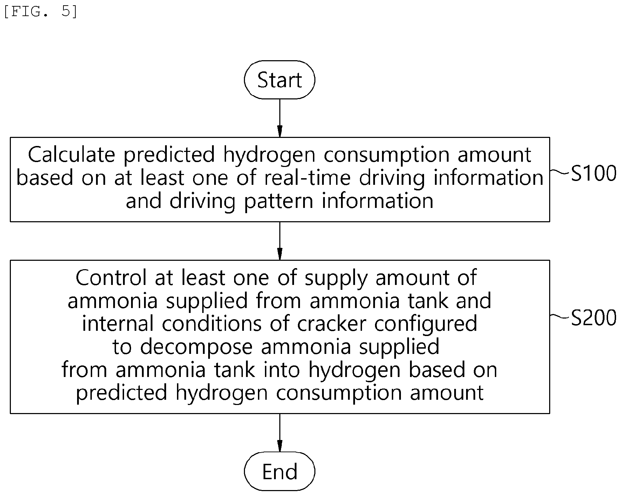

FIG. 5 is a flowchart illustrating procedures of a method for operating the apparatus according to an embodiment of the present disclosure.

Referring to FIGS. 1 and 5, the method for operating the apparatus 100 may be a method for controlling a vehicle equipped with an ammonia fuel cell.

In step S100, the apparatus 100 may calculate the predicted hydrogen consumption amount based on at least one of, optionally both of, the real-time driving information and the driving pattern information. Embodiments for step S100 may be performed by the predicted hydrogen consumption amount calculation unit 310 shown in FIG. 3, and the predicted hydrogen consumption amount calculation unit 400 shown in FIG. 3.

In step S200, the apparatus 100 may control at least one of, optionally both of, the supply amount of ammonia supplied from the ammonia tank 110 and the internal conditions of the cracker 120 configured to decompose the ammonia supplied from the ammonia tank 110 into hydrogen based on the predicted hydrogen consumption amount. Embodiments for step S200 may be performed by the controller 130 shown in FIG. 1, the ammonia supply amount control unit 320 shown in FIG. 3, and/or the cracker condition control unit 330 shown in FIG. 3.

The apparatus 100 for controlling a vehicle equipped with an ammonia fuel cell according to the embodiments of the present disclosure may be mounted on a vehicle, typically together with and/or in functional conjunction with the ammonia tank 110, the cracker 120, and the controller 130. According to an embodiment of the present disclosure, as the cracker 120 decomposes the ammonia (NH3) stored in and supplied from the ammonia tank 110 into hydrogen (H2) and nitrogen (N2), the produced hydrogen (H2) of the produced hydrogen and nitrogen may be supplied to a fuel cell. The fuel cell may generate electricity which enables a vehicle to move. For example, the ammonia tank 110 may be mounted on a lower portion of the vehicle. The cracker 120 may be mounted at the back of the driver's seat of the vehicle. The controller 130 may also be mounted at the back of the driver's seat of the vehicle. The fuel cell may be mounted on the side of the vehicle.

Meanwhile, the disclosed embodiments may be implemented in the form of a recording medium which stores instructions executable by a computer. The instructions may be stored in the form of program code, and when executed by the processor, may generate a program module to perform operations of the disclosed embodiments. The recording medium may be implemented as a computer-readable recording medium.

The computer-readable recording medium may include all types of recording media in which instructions that can be decoded by the computer are stored. For example, there may be a read only memory (ROM), random access memory (RAM), magnetic tape, magnetic disk, flash memory, optical data storage device and the like.

As above, the disclosed embodiments have been described with reference to the accompanying drawings. It will be understood by persons skilled in the art to which the present disclosure pertains that the present disclosure may be embodied in forms different from the disclosed embodiments without changing the technical idea or essential features of the present disclosure. The disclosed embodiments are illustrative, and should not be interpreted as limiting.

## Claims

1. An apparatus (100) for controlling a vehicle equipped with an ammonia fuel cell, the apparatus (100) comprising:
an ammonia tank (110) configured to store ammonia;
a cracker (120) configured to decompose the ammonia supplied from the ammonia tank (110) into hydrogen; and
a controller (130, 300) configured to calculate a predicted hydrogen consumption amount based on at least one of real-time driving information (210) and driving pattern information (220), and to control at least one of a supply amount of ammonia and internal conditions of the cracker (120) based on the predicted hydrogen consumption amount.

2. The apparatus (100) according to claim 1, wherein the controller (130, 300) comprises:
a predicted hydrogen consumption amount calculation unit (310; 400) configured to calculate a plurality of predicted hydrogen consumption amounts at specific points in time based on at least one of the real-time driving information (210) and the driving pattern information (220) for each specific point in time, and calculate a final predicted hydrogen consumption amount based on at least one of the plurality of predicted hydrogen consumption amounts; and
an ammonia supply amount control unit (320) configured to calculate the supply amount of ammonia required to secure the final predicted hydrogen consumption amount, and perform operations of controlling pipe and valve systems so as to supply the ammonia to the cracker (120) as much as the calculated supply amount of the ammonia.

3. The apparatus (100) according to claim 1 or 2, wherein the controller (130, 300) comprises:
a predicted hydrogen consumption amount calculation unit (310; 400) configured to calculate a plurality of predicted hydrogen consumption amounts at specific points in time based on at least one of the real-time driving information (210) and the driving pattern information for each specific point in time, and calculate a final predicted hydrogen consumption amount based on at least one of the plurality of predicted hydrogen consumption amounts; and
a cracker condition control unit (330) configured to control internal conditions of the cracker (120) based on a decomposition amount in which the ammonia is decomposed into hydrogen within the cracker (120) and the final predicted hydrogen consumption amount.

4. The apparatus (100) according to claim 2 or 3, wherein the predicted hydrogen consumption amount calculation unit (400) comprises:
a first predicted hydrogen consumption amount calculation unit (410) configured to calculate a first predicted hydrogen consumption amount at a first time point based on first real-time driving information at the first time point;
a second predicted hydrogen consumption amount calculation unit (420) configured to calculate a second predicted hydrogen consumption amount at a second time point later than the first time point based on at least one of the real-time driving information (210) and the driving pattern information; and
a final predicted hydrogen consumption amount calculation unit (430) configured to calculate a final predicted hydrogen consumption amount based on at least one of the first predicted hydrogen consumption amount and the second predicted hydrogen consumption amount.

5. The apparatus (100) according to claim 4, wherein the second predicted hydrogen consumption amount calculation unit (420) is configured to:
predict a driving state of a driver at the second time point based on the first real-time driving information at the first time point using an artificial intelligence model that has performed training the existing driving pattern information of the driver; and
calculate the second predicted hydrogen consumption amount corresponding to a change in the predicted hydrogen consumption amount, by analyzing a difference between the first time point and the second time point.

6. The apparatus (100) according to any one of claims 1 to 5, wherein the predicted hydrogen consumption amount calculation unit (310; 400) is configured to:
predict a maximum sudden acceleration state based on the real-time driving information (210) and the driving pattern information; and
calculate the predicted hydrogen consumption amount required to stably supply the hydrogen in the maximum sudden acceleration state.

7. The apparatus (100) according to any one of claims 1 to 6, wherein the predicted hydrogen consumption amount calculation unit (310; 400) calculates the predicted hydrogen consumption amount based on the real-time driving information (210), the driving pattern information (220), battery information of the apparatus (100), and internal status information of the ammonia tank (110).

8. The apparatus (100) according to any one of claims 1 to 7, wherein the real-time driving information (210) includes at least one of a magnitude of pressure applied to an accelerator pedal, a change amount in the magnitude of pressure applied to the accelerator pedal, a magnitude of pressure applied to a brake pedal, a change amount in the magnitude of pressure applied to the brake pedal, the number of times of sudden acceleration during a preset period, the number of times of sudden braking during a preset period, a driving speed, a driving distance, a driving time and a drive mode, and
the driving pattern information includes at least one of an acceleration pattern, a deceleration pattern, a usage ratio of drive mode, an average driving speed, the average number of times of lane change, and an internal environment of the vehicle.

9. A method for operating an apparatus (100) for controlling a vehicle equipped with an ammonia fuel cell, the method comprising:
calculating a predicted hydrogen consumption amount based on at least one of real-time driving information (210) and driving pattern information; and
controlling at least one of a supply amount of ammonia supplied from an ammonia tank (110) based on the predicted hydrogen consumption amount, and internal conditions of a cracker (120) configured to decompose the ammonia supplied from the ammonia tank (110) into hydrogen.

10. The method according to claim 9, wherein the apparatus (100) used is an apparatus (100) defined by any one of claims 2 to 8.

11. A vehicle comprising an ammonia fuel cell and an apparatus (100) for controlling the vehicle equipped with the ammonia fuel cell as defined in any one of claims 1 to 8.
